# EUROPÄISCHE PATENTSCHRIFT

(11) **EP 1 873 031 B1**
(45) Veröffentlichungstag und Bekanntmachung des Hinweises auf die Patenterteilung: **18.02.2009**
(21) Anmeldenummer: 07012728.7
(22) Anmeldetag: 28.06.2007
(51) Int. Cl.: B60W 10/06

(54) **Verfahren und Steuereinheit für einen Fahrantrieb**
Method and control device for a traction drive
Procédé et unité de commande pour un entraînement de roulement

(30) Priorität: 29.06.2006 DE 102006029904
(43) Veröffentlichungstag der Anmeldung: 02.01.2008
(73) Patentinhaber: Brueninghaus Hydromatik GmbH, 89275 Elchingen (DE)
(72) Erfinder: Brand, Michael, 89075 Ulm (DE); Müller, Tobias, 89415 Lauingen (DE)
(74) Vertreter: Beder, Jens

(56) Entgegenhaltungen:
- EP-A2- 0 389 262
- DE-A1- 3 526 671
- DE-A1-4102004 037 32
- DE-C1- 10 037 676

## Beschreibung

Die Erfindung betrifft ein Verfahren zur Steuerung eines Fahrantriebs sowie eine elektronische Steuereinheit für den Fahrantrieb.

Aus der EP 1 619 067 A2 ist ein Verfahren zur Einstellung einer Fahrgeschwindigkeit eines Fahrzeugs sowie eine Steuerschaltung für einen Motor bekannt, bei dem zunächst eine Wunschbeschleunigung aus den Daten eines Fahrpedals ermittelt wird. Die Umsetzung der Beschleunigung erfolgt unter Berücksichtigung der ermittelten Wunschbeschleunigung sowie eines eingestellten Beschleunigungsmodus, mit dessen Hilfe die Stärke der gewünschten Beschleunigung festgelegt wird. Die Steuerung des Antriebs erfolgt dann ausschließlich aufgrund der Beschleunigungsanforderung und berücksichtigt somit nicht die letztlich für die sich anschließende stationäre Fahrt erforderliche Antriebsleistung.

Der bekannte Antrieb hat daher den Nachteil, dass aufgrund der ausschließlich sich an dem Beschleunigungswunsch orientierenden Steuerung eine Optimierung des Betriebspunkts der Antriebsmaschine in der Beschleunigungsphase hinsichtlich der Wirtschaftlichkeit nicht erfolgt.

(Ein weiteres Verfahren ist aus DE 10037676 C1 bekannt und beinhaltet die Merkmale des Oberbegriffs der Ansprüche 1 und 9.)

Der Erfindung liegt daher die Aufgabe zugrunde, ein Verfahren zur Steuerung eines Antriebssystems sowie eine elektronische Steuereinheit hierfür zu schaffen, wobei eine hinsichtlich der Wirtschaftlichkeit optimierte Beschleunigung erreicht wird.

Die Aufgabe wird durch das erfindungsgemäße Verfahren nach Anspruch 1 sowie die erfindungsgemäße elektronische Steuereinheit nach Anspruch 9 gelöst.

Erfindungsgemäß wird bei dem Verfahren zur Steuerung des Fahrantriebs ein optimierter Betriebspunkt einer Antriebsmaschine des Fahrantriebs ermittelt, wobei bei der Ermittlung des optimierten Betriebspunkts für eine Beschleunigungsphase eine Ziel-Antriebsleistung für die sich anschließende stationäre Fahrt mit einer Ziel-Geschwindigkeit berücksichtigt wird. Hierzu wird zunächst die Ziel-Antriebsleistung ermittelt, die zur Überwindung des Fahrwiderstands bei der Ziel-Geschwindigkeit erforderlich ist. Die elektronische Steuereinheit weist zur Ermittlung der Ziel-Antriebsleistung einen Leistungsschätzabschnitt auf.

Die Ermittlung des optimierten Betriebspunkts für die Beschleunigungsphase berücksichtigt somit bereits die Ziel-Antriebsleistung, welche bei der sich anschließenden stationären Fahrt erforderlich ist. Das Überschwingen des Drehzahlverlaufs der Antriebsmaschine, welches üblicher Weise während einer Beschleunigungsphase auftritt, sowie das anschließende Zurücknehmen z. B. der Drosselklappenstellung oder der Einspritzmenge im Falle eines Dieselmotors, kann somit vermindert oder vollständig unterdrückt werden. Infolgedessen sinkt der Treibstoffverbrauch ab.

Die Unteransprüche betreffen vorteilhafte Weiterbildungen des erfindungsgemäßen Verfahrens sowie der elektronischen Steuereinheit.

Zur Ermittlung der Ziel-Antriebsleistung wird vorzugsweise eine Fahrpedalstellung sowie eine Ist-Geschwindigkeitskenngröße ermittelt. Die Ist-Geschwindigkeitskenngröße kann dabei beispielsweise eine Abtriebswellendrehzahl am Ausgang eines stufenlosen Getriebes des Antriebssystems sein. Ebenso ist jedoch beispielsweise eine Tachosignal verwendbar. Ausgehend von der Geschwindigkeitskenngröße der momentanen Geschwindigkeit (nachfolgend einfach als Ist-Geschwindigkeit bezeichnet) und der Position eines Fahrpedals kann somit eine Zielgeschwindigkeit für das Fahrzeug ermittelt werden. Unter dem Begriff Fahrpedal ist für die vorliegende Anmeldung entweder tatsächlich ein Fußpedal oder auch ein handbetätigter Fahrhebel zu verstehen. Bei Kenntnis der Zielgeschwindigkeit für das Fahrzeug lässt sich hieraus die Ziel-Antriebsleistung, welche zur Überwindung des Fahrwiderstands bei der Zielgeschwindigkeit erforderlich ist, berechnen. Der Fahrwiderstand umfasst beispielsweise Luftwiderstand und Rollwiderstand des Fahrzeugs.

Zur Ermittlung der Fahrpedalstellung ist die elektronische Steuereinheit mit einem Fahrpedal-Positionsgeber verbunden. Zur Erfassung der Abtriebswellendrehzahl eines hydrostatischen Getriebes ist die elektronische Steuereinheit ferner mit einem Drehzahlsensor an einer Abtriebswelle des stufenlosen Getriebes verbunden.

Ferner ist es vorteilhaft, einen optimierten Betriebspunkt für die Antriebsmaschine aus einer Gesamtleistung und einer Beschleunigungsleistung zu ermitteln. Dabei ergibt sich die Ziel-Antriebsleistung aus der Differenz der Gesamtleistung und der berechneten Beschleunigungsleistung. Zur Berechnung der Beschleunigungsleistung wird die Fahrzeugmasse in einem Speicher der elektronischen Steuereinheit abgelegt und bei der Berechnung der Beschleunigungsleistung berücksichtigt. Die Beschleunigungsleistung ergibt sich aus der Ist-Geschwindigkeit und der Zielgeschwindigkeit, die durch die Fahrpedalstellung vorgegeben ist. Die Beschleunigungsleistung kann auch aus der berechneten Ziel-Antriebsleistung sowie einer aktuell gemessenen Leistung über die Drücke in den Arbeitleitungen und die Fahrzeugmasse ermittelt werden.

Ferner ist es insbesondere vorteilhaft, zur Bestimmung der Gesamtleistung eine an einem Hydromotor eines hydrostatischen Getriebes auftretende Druckdifferenz zu messen, wenn das stufenlose Getriebe ein hydrostatisches Getriebe ist. Zusammen mit der Abtriebsdrehzahl ergibt sich somit die hydrostatische Leistung des Fahrantriebs.

Insbesondere ist es vorteilhaft, aus der hydrostatischen Gesamtleistung sowie der ermittelten Beschleunigungsleistung eine Leistungskenngröße für die Beschleunigungsphase zu berechnen. Die Leistungskenngröße berücksichtigt dabei sowohl die Ziel-Antriebsleistung, welche die stationäre Antriebsleistung ist, als auch einen Anteil der Beschleunigungsleistung. Somit lässt sich das Beschleunigungsverhalten in der Beschleunigungsphase an die jeweiligen Anforderungen situationsgerecht anpassen. Dabei ist es weiterhin vorteilhaft, beispielsweise eine Änderungsrate der Fahrpedalstellung zu verwenden, um einen zu berücksichtigenden Anteil an der Beschleunigungsleistung variabel festzulegen.

Die elektronische Steuereinheit weist einen ersten Schätzabschnitt zum Abschätzen einer Beschleunigungsleistung und einen zweiten Schätzabschnitt zum Abschätzen einer stationären Ziel-Antriebsleistung auf.

Eine bevorzugte Ausführungsform ist in der Zeichnung dargestellt und wird in der nachfolgenden Beschreibung näher erläutert. Es zeigen:
- Fig. 1: eine schematische Darstellung eines Antriebssystems zur Durchführung des erfindungsgemäßen Verfahrens;
- Fig. 2: ein Beispiel für ein Kennfeld einer Brennkraftmaschine;
- Fig. 3: eine schematische Darstellung zur Verdeutlichung der Leistungsanteile,
- Fig. 4: ein Blockschaltbild einer erfindungsgemäßen elektronischen Steuereinheit und
- Fig. 5: ein Flussdiagramm zur Verdeutlichung des erfindungsgemäßen Verfahrens.

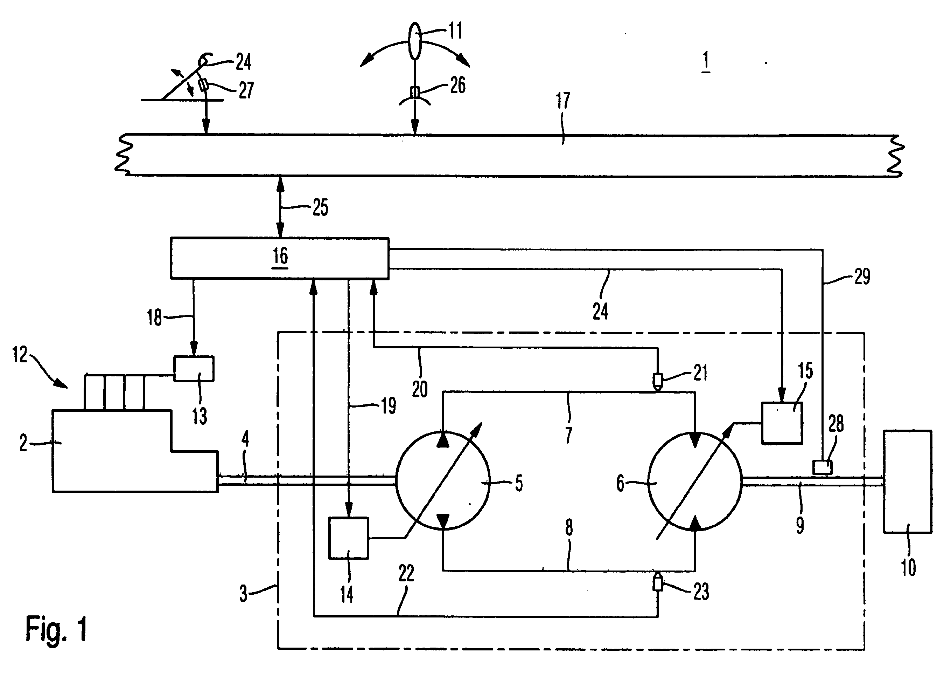

Die Fig. 1 zeigt vereinfacht ein Schaltbild eines Antriebssystems 1. Das Antriebssystem 1 weist eine Dieselbrennkraftmaschine 2 als primäre Antriebsmaschine auf. Die Verwendung einer Dieselbrennkraftmaschine 2 als primäre Antriebsquelle ist lediglich beispielhaft.

Die Dieselbrennkraftmaschine 2 treibt ein stufenloses Getriebe an. Im dargestellten Beispiel ist dies ein hydrostatisches Getriebe 3. Die Dieselbrennkraftmaschine 2 ist hierzu über eine Antriebswelle 4 mit einer Hydropumpe 5 verbunden. Die Hydropumpe 5 ist mit einem Hydromotor 6 in einem geschlossenen hydraulischen Kreislauf verbunden. Der geschlossene hydraulische Kreislauf wird durch die Hydropumpe 5, den Hydromotor 6 sowie eine erste Arbeitsleitung 7 und eine zweite Arbeitsleitung 8 gebildet. Bei der stark vereinfachten Darstellung der Fig. 1 wird auf weitere an sich bekannte Elemente im Zusammenhang mit dem hydraulischen Kreislauf zur Verkürzung der Darstellung verzichtet.

Der Hydromotor 6 wirkt über eine Abtriebswelle 9 mit zumindest einem angetriebenen Rad 10 des Fahrzeugs zusammen.

Zur Vorgabe eines Fahrgeschwindigkeitwunsches sind beispielsweise ein Fahrhebel 11 und/oder ein Fahrpedal 24 vorgesehen. Zur Erfassung der Bewegung des Fahrhebels 11 ist ein Positionssensor 26 vorgesehen. Ebenso ist zur Erfassung der Stellung des Fahrpedals 24 ein Positionssensor 27 vorgesehen. Für die nachfolgende Beschreibung wird davon ausgegangen, dass der Fahrwunsch eines Bedieners durch das Fahrpedal 24 festgelegt wird. Der Begriff "Fahrpedal" wird daher im Rahmen der Erfindung stellvertretend für Fahrpedal und für Fahrhebel benutzt.

Die jeweilige Position des Fahrpedals 24 wird durch den Positionssensor 27 erfasst und ein entsprechendes Steuersignal in einen CAN-Bus 17 eingespeist. Der CAN-Bus 17 steht über eine Signalleitung 25 mit einer elektronischen Steuereinheit 16 in Verbindung. Alternativ wird das Signal des Positionssensors 27 der elektronischen Steuereinheit 16 direkt zugeführt. Die elektronische Steuereinheit 16 ist über eine Steuerleitung 18 mit einer Einspritzanlage 12 der Dieselbrennkraftmaschine 2 verbunden. Die Einspritzanlage 12 umfasst eine Einspritzpumpe 13, welche beispielsweise eine eigene Steuerelektronik umfasst, und die durch die elektronische Steuereinheit 16 lediglich eine einzustellende Drehzahl übermittelt bekommt. Die Regelung der Einspritzmenge erfolgt dann wiederum durch die Einspritzpumpe 13 bzw. deren Regelelektronik.

Im dargestellten Ausführungsbeispiel ist die elektronische Steuereinheit 16 ferner zur Regelung des hydrostatischen Getriebes 3 vorgesehen. Hierzu ist die elektronische Steuereinheit 16 über eine zweite Signalleitung 19 mit einer ersten Verstellvorrichtung 14 verbunden. Die erste Verstellvorrichtung 14 wirkt mit einem Verstellmechanismus der Hydropumpe 5 zusammen. Durch die auf den Verstellmechanismus der Hydropumpe 5 wirkende Verstellvorrichtung 14 wird beispielsweise bei einer Axialkolbenmaschine ein Schwenkwinkel einer Schrägscheibe eingestellt. Die Hydropumpe 5 ist daher mittels der Verstellvorrichtung 14 in ihrem Fördervolumen einstellbar.

In entsprechender Weise ist die elektronische Steuereinheit 16 über eine dritte Signalleitung 24 mit einer zweiten Verstellvorrichtung 15 verbunden. Die zweite Verstellvorrichtung 15 wirkt mit einem Verstellmechanismus des Hydromotors 6 zusammen. Durch Betätigen des Verstellmechanismus mittels der zweiten Verstellvorrichtung 15 wird somit das Schluckvolumen des Hydromotors 6 eingestellt. Das gesamte Übersetzungverhältnis des hydrostatischen Getriebes 3 ergibt sich folglich durch entsprechende Einstellung des Fördervolumens der Hydropumpe 5 sowie des Schluckvolumens des Hydromotors 6.

Um die Berechnung des optimierten Betriebspunkts für die Dieselbrennkraftmaschine 2 durch die elektronische Steuereinheit 16 zu ermöglichen, sind ferner in dem hydrostatischen Getriebe 3 verschiedene Sensoren angeordnet. In den Arbeitsleitungen 7, 8 sind ein erster Drucksensor 21 und ein zweiter Drucksensor 23 angeordnet. Mittels des ersten Drucksensors 21, der über eine Messleitung 20 mit der elektronischen Steuereinheit 16 verbunden ist, wird der elektronischen Steuereinheit 16 der Arbeitsleitungsdruck P_{AL1} in der ersten Arbeitsleitung 7 übermittelt. In entsprechender Weise wird durch den zweiten Drucksensor 23 der Arbeitsleitungsdruck P_{AL2} in der zweiten Arbeitsleitung 8 über eine zweite Messleitung 22 zugeführt. Ferner ist ein Drehzahlsensor 28 vorgesehen, welcher eine Drehzahl n der Abtriebswelle 9 des hydrostatischen Getriebes 3 erfasst. Der Drehzahlsensor 28 ist hierfür über eine dritte Messleitung 29 oder den CAN-Bus 17 mit der elektronischen Steuereinheit 16 verbunden. Anstelle der beiden Drucksensoren 21, 23 kann auch ein einzelner Drucksensor vorgesehen sein, der über ein Wechselventil mit den Arbeitsleitungen 7, 8 verbunden ist. Dieser Drucksensor misst dann jeweils den höheren der beiden Arbeitsleitungsdrücke.

Bei dem erfindungsgemäßen Verfahren zur Steuerung des Antriebssystems 1 bzw. zur Ermittlung eines optimierten Betriebspunkts für die Dieselbrennkraftmaschine 2 wird jeweils die Fahrpedalstellung des Fahrpedals 24 durch den Positionssensor 27 ermittelt. Gleichzeitig wird mittels des ersten und zweiten Drucksensors 21, 23 sowie der Drehzahl n der Abtriebswelle 9 die hydrostatische Gesamtleistung des Fahrantriebs ermittelt. Aus der ermittelten Abtriebswellendrehzahl n lässt sich bei Kenntnis der Einstellung des Schluckvolumens des Hydromotors 6 sowie dem über den Hydromotor 6 auftretenden Druckabfall die hydrostatische Gesamtleistung berechnen.

Zudem wird aus der Änderung der Position des Fahrpedals 24, die einer gewünschten Geschwindigkeitsänderung entspricht, bei bekannter Fahrzeugmasse eine erforderliche Beschleunigungsleistung berechnet.

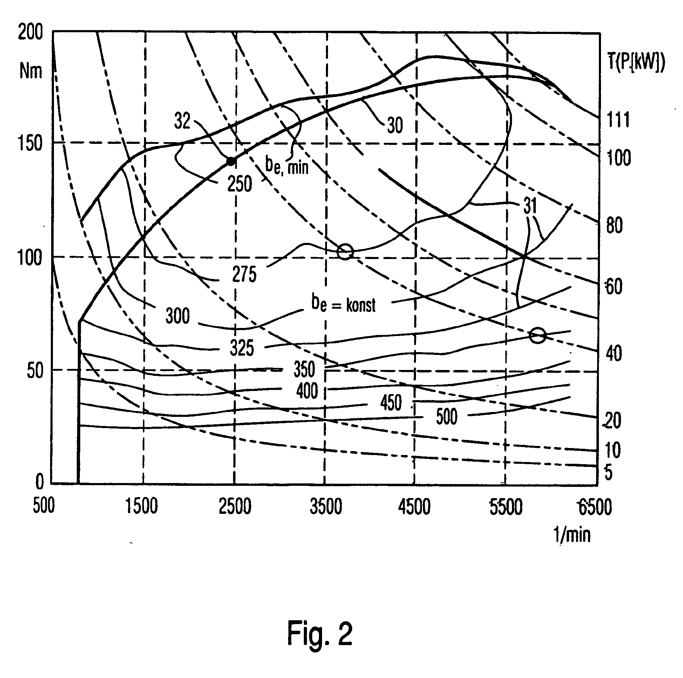

In der Fig. 2 ist beispielhaft das Kennfeld einer Verbrennungskraftmaschine dargestellt. Mit 30 ist die Volllastkennlinie bezeichnet. Die Kurvenschar 31 gibt Linien konstanten spezifischen Kraftstoffverbrauchs wieder. Es ist zu erkennen, dass ausgehend von einem hinsichtlich des spezifischen Kraftstoffverbrauchs idealen Betriebspunkt 32 in Richtung höherer Drehzahlen ein steigender spezifischer Brennstoffverbrauch auftritt. Es liegt daher im Interesse der Wirtschaftlichkeit, den Betriebspunkt möglichst nah an den idealen Betriebspunkt 32 heranzulegen. Aufgrund der Leistungsanforderung, die zum Beschleunigen erforderlich ist, wird dies in der Regel jedoch nur teilweise möglich sein. Bisherige Regelstrategien haben lediglich die Gesamtleistung berücksichtigt, die während eines Beschleunigungsvorgangs eingestellt werden soll. Eine Unterscheidung hinsichtlich eines Leistungsanteils, der zum stationären Fahren mit der Ziel-Geschwindigkeit erforderlich ist, und einem zur Beschleunigung erforderlichen Leistungsanteil ist dagegen nicht erfolgt. Dies hat zur Folge, dass aufgrund der gesamten Beschleunigungsleistung ein in der Regel zu hoher Drehzahlwert eingestellt wurde. Zwar resultiert dies in einer dynamischen Beschleunigung, treibt jedoch unnötig den Kraftstoffverbrauch in die Höhe.

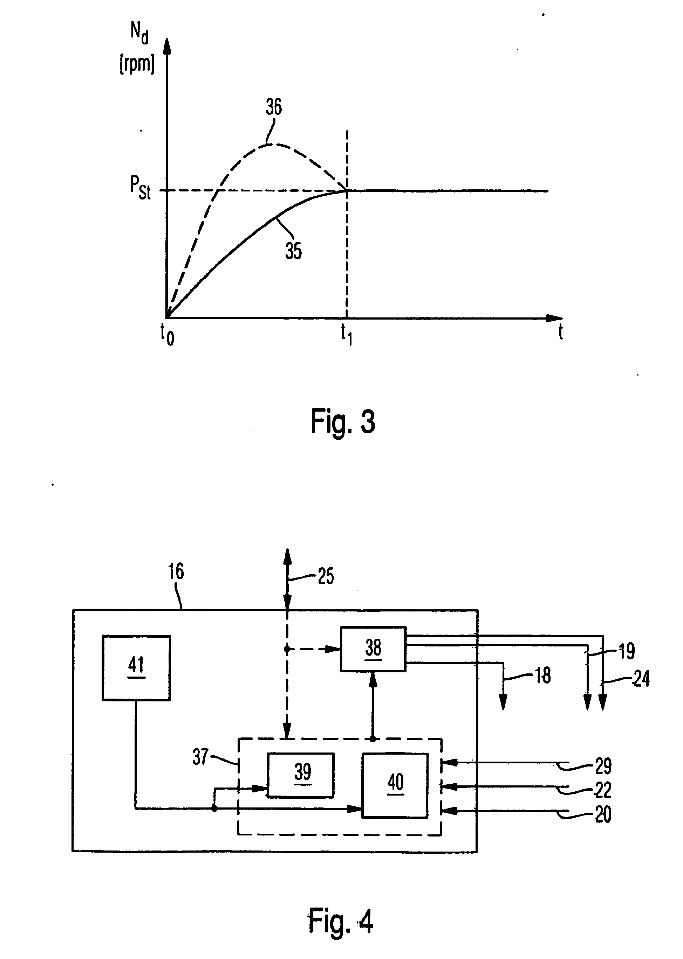

Dies ist in Fig. 3 stark vereinfacht dargestellt. Die durchgezogene und mit 35 bezeichnete Linie kennzeichnet den Verlauf der Drehzahl während einer Beschleunigungsphase von t₀ bis t₁. Es ist zu erkennen, dass sich die Kurve 35 an der ab dem Zeitpunkt t₁ konstanten erforderlichen Leistung (Ziel-Antriebsleistung) orientiert und sich dieser kontinuierlich annähert. Die gestrichelte, mit 36 bezeichnete Linie dagegen gibt die bisherige Regelstrategie wieder. Es wird eine Beschleunigung durchgeführt, wobei zunächst zum Erhöhen der Leistung einen hohe Dieseldrehzahl eingestellt wird, welche am Ende des Beschleunigungsvorgangs auf das für die stationäre Fahrt mit der Zielgeschwindigkeit erforderliche Maß zurückgeführt wird. Damit kommt es zu einem Überschwingen der Drehzahl während der Beschleunigungsphase zwischen t₀ und t₁. Neben dem erhöhten Kraftstoffbedarf widerspricht dies auch dem Komfortempfinden eines Bedieners.

In der Fig. 4 ist eine elektronische Steuereinheit 16 dargestellt, mittels derer das erfindungsgemäße Verfahren durchgeführt wird. Das elektronische Steuergerät 16 umfasst einen Leistungsschätzabschnitt 37. Der Leistungsschätzabschnitt 37 ist so eingerichtet, dass er als Ausgangswert eine ermittelte Ziel-Antriebsleistung P_{Ziel} und eine Beschleunigungsleistung an eine zentrale Recheneinheit 38 übermittelt. Die zentrale Recheneinheit 38 ist über die Signalleitungen 18, 19 und 24 mit den Verstellvorrichtungen 14, 15 sowie der Einspritzpumpe 13 verbunden. Der Leistungsschätzabschnitt 37 zum Ermitteln der Ziel-Antriebsleistung P_{ziel} umfasst einen ersten Schätzabschnitt 39 und einen zweiten Schätzabschnitt 40. Um die Ziel-Antriebsleistung P_{ziel} abschätzen zu können, ist der Leistungsschätzabschnitt 37 mit einem Fahrpedalpositionsgeber über eine Verbindungsleitung 25 verbunden. Zudem ist der Leistungsschätzabschnitt 37 über die Messleitungen 20, 22 und 29 mit den Drucksensoren 21, 23 sowie dem Drehzahlsensor 28 verbunden. Ferner ist der Leistungsschätzabschnitt 37 mit einem Speicherelement 41 der elektronischen Steuereinheit 16 verbunden. In dem Speicherelement 41 ist das Fahrzeuggewicht des zu beschleunigenden Fahrzeugs abgespeichert. Die elektronische Steuereinheit 16 kann somit in verschiedenen Fahrzeugen zum Einsatz kommen. Um die Beschleunigungsleistung P_{Beschl}. korrekt ermitteln zu können, ist es daher erforderlich, die jeweils zutreffende Fahrzeugmasse in dem Speicherelement 41 abzulegen. In dem Speicherelement 41 kann ferner das Kennfeld der Brennkraftmaschine gespeichert sein.

Zunächst wird durch den Leistungsschätzabschnitt 37 aufgrund der Informationen über den Druckabfall über den Hydromotor 6 die hydrostatische Gesamtleistung P_{Ges}. ermittelt. In dem ersten Schätzabschnitt 39 wird zudem die zur Erreichung der Ziel-Geschwindigkeit erforderliche Beschleunigungsleistung P_{Beschl}. ermittelt. Hierzu wird ausgehend von der Ist-Geschwindigkeit Vᵢₛₜ, die aufgrund des Sensorsignals des Drehzahlsensors 28 ermittelt wird, und der Position des Fahrpedals 24 zunächst eine Ziel-Geschwindigkeit ermittelt. Die Ziel-Geschwindigkeit ist dabei vorzugsweise durch den seitens des Fahrers vorgegebenen Winkel des Fahrpedals 24 festgelegt. Aufgrund des Geschwindigkeitszuwachses bestimmt. Aus der Geschwindigkeitsdifferenz zu der Ziel-Geschwindigkeit V_{ziel} und der bekannten Fahrzeugmasse, welche in dem Speicherelement 41 abgelegt ist, wird durch den ersten Schätzabschnitt 39 die Beschleunigungsleistung P_{Beschl.} zum Beschleunigen des Fahrzeugs von der Ist-Geschwindigkeit Vᵢₛₜ auf die Ziel-Geschwindigkeit ermittelt. Durch den zweiten Schätzabschnitt 40 ist zudem bereits die hydrostatische Gesamtleistung P_{Ges}. berechnet worden. Aus der hydrostatischen Gesamtleistung P_{Ges} sowie der Beschleunigungsleistung P_{Beschl}. wird dann die Ziel-Antriebsleistung P_{Ziel} für den sich an die beschleunigte Fahrt anschließenden Fahrzustand ermittelt.

Im vereinfachten Fall wird die Ziel-Antriebsleistung P_{Ziel}, die in dem Leistungsschätzabschnitt 37 gemäß der vorbeschriebenen Vorgehensweise ermittelt wurde, an die zentrale Recheneinheit 38 übermittelt. Die zentrale Recheneinheit 38 ermittelt auf Basis der Ziel-Antriebsleistung P_{ziel} den optimierten Betriebspunkt für die Beschleunigungsphase. Um das Beschleunigungsverhalten individuell einstellen zu können, ist es vorteilhaft anstelle der Ziel-Antriebsleistung P_{Ziel} eine Leistungskenngröße durch den Leistungsschätzabschnitt 37 durch die zentrale Recheneinheit 38 zu ermitteln. Die Leistungskenngröße berücksichtigt neben der Ziel-Antriebsleistung P_{Ziel} einen Anteil der Beschleunigungsleistung P_{Beschl.}. Dabei kann es insbesondere vorteilhaft sein, die Höhe des Anteils, der durch die Leistungskenngröße berücksichtigt wird variabel festzulegen. Als Eingangsgröße eignet sich hierzu eine Fahrpedalstellungsänderung.

Die Fahrpedalstellungsänderung wird durch die zentrale Recheneinheit 38 ermittelt. Hierzu wird der Sensorwert des Fahrpedalpositionssensors 27 abgetastet. Der Leistungsschätzungsabschnitt übermittelt ferner neben der Ziel-Antriebsleistung P_{Ziel} die Beschleunigungsleistung P_{Beschl}. an die zentrale Recheneinheit 38. Ausgehend von der Änderungsrate der Fahrpedalstellung wird dann durch die zentrale Recheneinheit 38 ein Anteil der Beschleunigungsleistung P_{Beschl.} berücksichtigt. Der zu berücksichtigende Anteil kann z.B. in einer Look-up-Tabelle gespeichert sein. Tritt beispielsweise ein Fahrer das Fahrpedal 24 schnell nieder, so ist davon auszugehen, dass er eine besonders starke Beschleunigung für erforderlich hält. Infolgedessen wird ein entsprechend großer Teil der Beschleunigungsleistung P_{Beschl.} bei der Ermittlung der Leistungskenngröße durch den Leistungsschätzabschnitt 37 berücksichtigt.

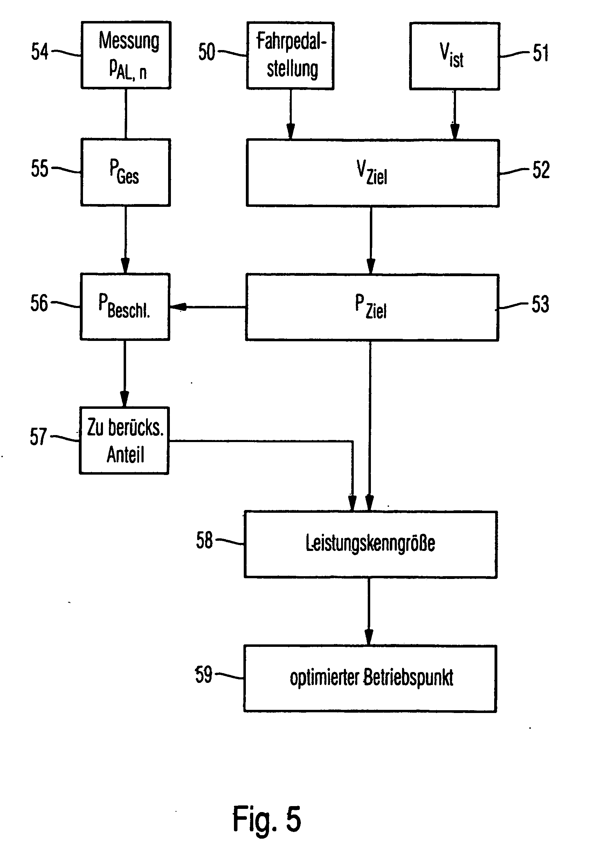

Eine Übersicht über die Vorgehensweise ist noch einmal in der Fig. 5 dargestellt. Zunächst wird eine Fahrpedalstellung 50 und ein Ist-Geschwindigkeit 51 ermittelt. Ausgehend von der Ist-Geschwindigkeit Vᵢₛₜ der ermittelten Fahrpedalstellung wird eine Ziel-Geschwindigkeit V_{Ziel} 52 ermittelt. Auf Basis der ermittelten Ziel-Geschwindigkeit V_{Ziel} wird dann die erforderliche Antriebsleistung P_{ziel} als Ziel-Antriebsleistung ermittelt 53.

Gleichzeitig wird der Druck p_{AL} in den Arbeitsleitungen 7, 8 sowie die Abtriebsdrehzahl n des hydrostatischen Getriebes 3 gemessen 54. Aus diesen Werten wird in der elektronischen Steuereinheit 16 eine Gesamtantriebsleistung P_{Ges}. berechnet 55. Ausgehend von der Gesamtantriebsleistung P_{Ges} und der Ziel-Antriebsleistung P_{Ziel} wird der auf die Beschleunigung anfallende Teil, also die Beschleunigungsleistung P_{Beschl}. berechnet 56.

Soll ein Teil der Beschleunigungsleistung P_{Beschl.} bei der Bestimmung des optimierten Betriebspunkts berücksichtigt werden, so wird dieser in Schritt 57 ermittelt. Aus der Ziel-Antriebsleistung P_{Ziel} und dem zu berücksichtigten Anteil der Beschleunigungsleistung P_{Beschl.} wird eine Leistungskenngröße berechnet 58. Auf Basis dieser Leistungskenngröße wird dann in einem entsprechenden Kennfeld der Antriebsmaschine 2 der optimierte Betriebspunkt bestimmt 59.

Die Erfindung ist nicht auf das dargestellte Ausführungsbeispiel beschränkt. Vielmehr ist auch die Kombination einzelner Merkmale des Ausführungsbeispiels denkbar.

## Patentansprüche

1. Verfahren zur Steuerung eines Fahrantriebs (1) mit einer Antriebsmaschine (2) und einem stufenlosen Getriebe (3) mit folgenden Verfahrensschritten:
- Ermitteln einer Ziel-Antriebsleistung (P_{ziel}) der Antriebsmaschine (2; 53)
- Ermitteln eines optimierten Betriebspunkts (59) der Antriebsmaschine (2) für eine Beschleunigungsphase (t₀ - t₁) unter Berücksichtigung der ermittelten Ziel-Antriebsleistung (P_{Ziel}) ,
**dadurch gekennzeichnet,**
**dass** zur Ermittlung des optimierten Betriebspunkts (59) zunächst eine Beschleunigungsleistung (P_{Beschl.}) zur Erreichung einer Zielgeschwindigkeit ermittelt wird und, dass die Beschleunigungsleistung (P_{Beschl.}) unter Berücksichtigung einer Fahrzeugmasse und der Ist-Geschwindigkeitskenngröße (Vᵢₛₜ) ermittelt wird (56).

2. Verfahren nach Anspruch 1,
**dadurch gekennzeichnet,**
**dass** zur Ermittlung der Ziel-Antriebsleistung (P_{Ziel}) eine Fahrpedalsstellung und eine Ist-Geschwindigkeitskenngröße (Vᵢₛₜ) ermittelt wird (50, 51).

3. Verfahren nach Anspruch 1 oder 2,
**dadurch gekennzeichnet,**
**dass** zur Ermittlung des optimierten Betriebspunkts (59) zunächst eine Gesamtleistung (P_{Ges}.) ermittelt wird.

4. Verfahren nach einem der Ansprüche 1 bis 3,
**dadurch gekennzeichnet,**
**dass** die Beschleunigungsleistung (P_{Beschl.}) unter Berücksichtigung einer Fahrpedalstellung ermittelt wird (56).

5. Verfahren nach Anspruch 3,
**dadurch gekennzeichnet,**
**dass** zur Ermittlung der Gesamtleistung (P_{Ges.}) ein erster und/oder ein zweiter Arbeitsleitungsdruck (P_{AL}) und eine Abtriebsdrehzahl (n) des stufenlosen Getriebes (3) gemessen wird.

6. Verfahren nach Anspruch 5,
**dadurch gekennzeichnet,**
**dass** zur Ermittlung des optimierten Betriebspunkts (59) auf Basis einer Leistungskenngröße berechnet wird, wobei die Leistungskenngröße die Ziel-Antriebsleistung (P_{ziel}) und einen Anteil der Beschleunigungsleistung (P_{Beschl.}) berücksichtigt (57, 58).

7. Verfahren nach Anspruch 6,
**dadurch gekennzeichnet,**
**dass** der zu berücksichtigende Anteil der Beschleunigungsleistung (P_{Beschl.}) variabel festgelegt wird.

8. Verfahren nach Anspruch 5 oder 6,
**dadurch gekennzeichnet,**
**dass** der zu berücksichtigende Anteil der Beschleunigungsleistung (P_{Beschl.}) in Abhängigkeit einer Änderungsrate der Fahrpedalstellung festgelegt wird.

9. Elektronische Steuereinheit für einen Fahrantrieb (1) zur Steuerung einer Antriebsmaschine (2) des Fahrantriebs, der eine stufenlos verstellbares Getriebe (3) umfasst, wobei die elektronische Steuereinheit (16) einen Leistungsschätzabschnitt (37) zur Ermittlung einer Ziel-Antriebsleistung (P_{Ziel}) aufweist,
**dadurch gekennzeichnet,**
**dass** der Leistungsschätzabschnitt (37) einen ersten Schätzabschnitt (39) zum Abschätzen einer Beschleunigungsleistung (P_{Beschl.}) zur Erreichung einer Zielgeschwindigkeit und einen zweiten Schätzabschnitt (40) zur Abschätzung einer stationären Ziel-Antriebsleistung (P_{Ziel}) aufweist,
**dass** die elektronische Steuereinheit (16) einen Speicherbereich (41) aufweist, in dem zumindest eine Fahrzeugmasse gespeichert ist, und, dass
die elektronische Steuereinheit (16) zur Ermittlung des optimierten Betriebspunkts eine zentrale Recheneinheit (38) umfasst, die mit dem Leistungsschätzabschnitt (37) verbunden ist.

10. Elektronische Steuereinheit nach Anspruch 9,
**dadurch gekennzeichnet,**
**dass** die elektronische Steuereinheit (16) mit einem Drehzahlsensor (28) zur Erfassung einer Abtriebswellendrehzahl (n) des stufenlosen Getriebes (3) und mit einem Fahrpedal-Positionsgeber (27) verbunden ist.

11. Elektronische Steuereinheit nach Anspruch 9 oder 10,
**dadurch gekennzeichnet,**
**dass** die elektronische Steuereinheit (16) mit einem ersten und einem zweiten Drucksensor (21, 23) zur Ermitteln einer Gesamtleistung (P_{Ges}.) verbunden ist.

## Claims

1. Method of controlling a travel drive (1) with a power plant (2) and a continuously variable transmission (3), with the following method steps:
- determination of a target drive power (P_{ziel}) of the power plant (2; 53),
- determination of an optimised operating point (59) of the power plant (2) for an acceleration phase (t₀ - tᵢ), taking account of the determined target drive power (P_{Ziel}),
**characterized in that**
to determine the optimised operating point (59), first an acceleration power (P_{Beschl.}) for reaching a target speed is determined, and
that the acceleration power (P_{Beschl.}) is determined taking account of a vehicle mass and the actual speed parameter (Vᵢₛₜ) (56).

2. Method according to Claim 1,
**characterized in that**
to determine the target drive power (P_{Ziel}), an accelerator pedal position and an actual speed parameter (Vᵢₛₜ) are determined (50, 51).

3. Method according to Claim 1 or 2,
**characterized in that**
to determine the optimised operating point (59), first a total power (P_{Ges}.) is determined.

4. Method according to one of Claims 1 to 3,
**characterized in that**
the acceleration power (P_{Beschl}.) is determined taking account of an accelerator pedal position (56).

5. Method according to Claim 3,
**characterized in that**
to determine the total power (P_{Ges.}), a first and/or a second working line pressure (P_{AL}) and a power take-off rotational speed (n) of the continuously variable transmission (3) are measured.

6. Method according to Claim 5,
**characterized in that**
to determine the optimised operating point (59), a calculation is done on the basis of a power parameter, the power parameter taking account of the target drive power (P_{Ziel}) and of a share of the acceleration power (P_{Beschl.}) (57, 58).

7. Method according to Claim 6,
**characterized in that**
the share of the acceleration power (P_{Beschl.}) to be taken into account is variably defined.

8. Method according to Claim 5 or 6,
**characterized in that**
the share of the acceleration power (P_{Beschl}.) to be taken into account is defined depending on a change rate of the accelerator pedal position.

9. Electronic control unit for a travel drive (1) to control a power plant (2) of the vehicle drive, which includes a continuously adjustable transmission (3), the electronic control unit (16) having a power estimation section (37) to determine a target drive power (P_{Ziel}),
**characterized in that**
the power estimation section (37) has a first estimation section (39) for estimating an acceleration power (P_{Beschl}.) to achieve a target speed, and a second estimation section (40), for estimating a stationary target drive power (P_{Ziel}),
that the electronic control unit (16) has a memory area (41), in which at least one vehicle mass is stored, and
that to determine the optimised operating point, the electronic control unit (16) includes a central arithmetic unit (38), which is connected to the power estimation section (37).

10. Electronic control unit according to Claim 9,
**characterized in that**
the electronic control unit (16) is connected to a rotational speed sensor (28) to capture a power take-off shaft rotational speed (n) of the continuously variable transmission (3), and to an accelerator pedal position sensor (27).

11. Electronic control unit according to Claim 9 or 10, **characterized in that** the electronic control unit (16) is connected to a first and a second pressure sensor (21, 23), to determine a total power (P_{Ges.}).

## Revendications

1. Dispositif de commande d'un système d'entraînement (1) comprenant un moteur d'entraînement (2) et une transmission à variation continue (3) comportant les étapes suivantes consistant à :
- établir une puissance de propulsion cible (P_{cible}) du moteur d'entraînement (2 ; 53)
- établir un point de fonctionnement optimal (59) du moteur d'entraînement (2) pour une phase d'accélération (t₀ - t₁) en tenant compte de la puissance de propulsion cible (P_{cible}),
**caractérisé en ce**
**que** pour établir le point de fonctionnement dynamique optimal (59), une puissance d'accélération (P_{accélération}) doit être déterminée pour atteindre une vitesse cible et en ce que la puissance d'accélération (P_{accélération}) est déterminée (56) en tenant compte d'une masse du véhicule et du paramètre caractéristique de vitesse réelle (V_{réelle}).

2. Procédé selon la revendication 1,
**caractérisé en ce**
**que** pour établir la puissance de propulsion cible (P_{cible}), une position de la pédale de l'accélérateur et un paramètre caractéristique de vitesse réelle (V_{réelle}) sont déterminés (50, 51).

3. Procédé selon la revendication 1 ou 2,
**caractérisé en ce**
**que** pour établir le point de fonctionnement optimal (59), une puissance totale (Pₜₒₜₐₗₑ) doit tout d'abord être déterminé.

4. Procédé selon l'une quelconque des revendications 1 à 3,
**caractérisé en ce**
**que** la puissance d'accélération (P_{accélération}) est déterminée (56) en tenant compte d'une position de la pédale de l'accélérateur.

5. Procédé selon la revendication 3,
**caractérisé en ce**
**que** pour déterminer la puissance totale (Pₜₒₜₐₗₑ), une première et/ou seconde puissance efficace (P_{efficace}) et une vitesse de sortie (n) de la transmission à variation continue (3) sont mesurées.

6. Procédé selon la revendication 5,
**caractérisé en ce**
**que** pour déterminer le point de fonctionnement optimal (59), un paramètre caractéristique de puissance est calculé, le paramètre caractéristique de puissance prenant en compte (57, 58) la puissance de propulsion cible (P_{cible}) et une partie de la puissance d'accélération (P_{accélération}).

7. Procédé selon la revendication 6,
**caractérisé en ce**
**que** la partie de la puissance d'accélération (P_{accélération}) à prendre en compte est déterminée comme étant variable.

8. Procédé selon la revendication 5 ou 6,
**caractérisé en ce**
**que** la partie de la puissance d'accélération (P_{accélération}) à prendre en compte est déterminée en fonction d'un taux de modification de la position positionnement de la pédale d'accélérateur.

9. Unité de commande électronique pour un système d'entraînement (1) destiné à commander un moteur d'entraînement (2) du système d'entraînement, comprenant une transmission à variation continue (3), l'unité de commande électronique (16) présentant un étage d'évaluation de la puissance (37) pour établir une puissance de propulsion cible (P_{cible}),
**caractérisée en ce**
**que** l'étage d'évaluation de la puissance (37) présente un premier étage d'évaluation (39) pour évaluer une puissance d'accélération (P_{accélération}) afin d'atteindre une vitesse cible et un second étage d'évaluation (40) pour évaluer une puissance de propulsion cible stationnaire (P_{cible}),
et en ce que l'unité de commande électronique (16) présente une zone de mémoire (41) dans laquelle une masse de véhicule au moins est mémorisée, et en ce que l'unité de commande électronique (16) destinée à établir le point de fonctionnement optimal présente une unité de calcul centrale (38) connectée à l'étage d'évaluation de la puissance (37).

10. Unité de commande électronique selon la revendication 9,
**caractérisée en ce**
**que** l'unité de commande électronique (16) est connectée à un capteur de vitesse de rotation (28) destiné à enregistrer le nombre de tours par minute de l'arbre d'entraînement (n) de la transmission à variation continue (3) et à un transmetteur de position de pédale d'accélération (27).

11. Unité de commande électronique selon la revendication 9 ou 10,
**caractérisée en ce**
**que** l'unité de commande électronique (16) est connectée à un premier et un second capteur de pression (21, 23) pour établir une puissance totale (Pₜₒₜₐₗₑ).
